# EUROPEAN PATENT APPLICATION

(11) **EP 4 258 430 A1**
(43) Date of publication of application: **11.10.2023**
(21) Application number: 22195840.8
(22) Date of filing: 15.09.2022
(51) Int. Cl.: H01M 50/103, H01M 50/586, H01M 50/593, H01M 50/595, H01M 50/533, H01M 50/15

(54) **SECONDARY BATTERY**

(30) Priority: 25.03.2022 JP 2022049893
(71) Applicant: KABUSHIKI KAISHA TOSHIBA, Minato-ku Tokyo 105-0023 (JP)
(72) Inventor: Yamamoto, Kuniaki, Tokyo, 105-0023 (JP)
(74) Representative: Hoffmann Eitle

(57) **Abstract**

According to one embodiment, a secondary battery (10) includes an outer container (12) including a pair of long side walls (16a, 16b) and a lid body (14), an electrode assembly (30), an output terminal (20), a lead (40A, 40B) including a junction (41), a first insulator (50), and a second insulator (50). The lead (40A, 40B) includes a first extending portion (45) extending from the junction (41), and a second extending portion (43) extending from the junction (41). The first insulator (50) includes an inner surface engaged with an outer surface of the first extending portion (45). The second insulator (50) includes an inner surface engaged with an outer surface of the second extending portion (43).

## Description

### FIELD

Embodiments described herein relate generally to a secondary battery.

### BACKGROUND

In recent years, secondary batteries with high energy density, for example, lithium-ion secondary batteries, have been widely used as power sources for electronic devices and electric vehicles. Such secondary batteries are constituted by accommodating an electrode assembly and a non-aqueous electrolyte in a rectangular parallelepiped outer container made of aluminum or aluminum alloy. Here, it is known that between a lid of the outer container and the electrode assembly, a predetermined interval is provided, and an insulator is used as a spacer to maintain the interval.

### BRIEF DESCRIPTION OF THE DRAWINGS

FIG. 1 is a perspective view showing an appearance of a secondary battery of the first embodiment.
FIG. 2 is an exploded perspective view of the secondary battery shown in FIG. 1.
FIG. 3 is a perspective view showing a lead.
FIG. 4 is a perspective view of the lead shown in FIG. 3 as viewed from a rear surface side.
FIG. 5 is a perspective view showing one of insulators.
FIG. 6 is a perspective view showing an electrode assembly, a negative electrode lead, a positive electrode lead, insulators and an adhesive member.
FIG. 7 is a cross-sectional view taken along line B-B shown in FIG. 6 as viewed from a direction of arrow C, showing together the negative electrode lead and insulator extracted.
FIG. 8 is a cross-sectional view taken along line B-B shown in FIG. 6 as viewed from a direction of arrow D, showing together the negative electrode lead and the insulator extracted.
FIG. 9 is a cross-sectional view taken along line A-A in FIG. 1.
FIG. 10 is a perspective view showing an electrode assembly, a positive electrode lead, a negative electrode lead and an insulator of a secondary battery according to the second embodiment.

### DETAILED DESCRIPTION

In general, according to one embodiment, a secondary battery comprises an outer container including a pair of long side walls opposing each other with an interval therebetween and a lid body fixed to one end of each of the pair of long side walls, an electrode assembly including a group of electrodes and current collecting tabs extending from the group of electrodes, and accommodated in the outer container, an output terminal provided on the lid body, a lead provided between the electrode assembly and the lid body inside the outer container and electrically connecting the output terminal and the current collecting tabs to each other, and including a junction opposing the lid body and connected to the output terminal, a first extending portion extending from the junction along an inner surface of one of the long side walls and a second extending portion extending from the junction along an inner surface of the other one of the long side walls, a first insulator provided between the electrode assembly and the lid body inside the outer container, disposed to oppose the inner surface of one of the long side walls and including an inner surface engaged with an outer surface of the first extending portion and a second insulator provided between the electrode assembly and the lid body inside the outer container, disposed to oppose an inner surface of the other one of the long side walls, and including an inner surface engaged with an outer surface of the second extending portion.

Embodiments will be described hereinafter with reference to the accompanying drawings. The disclosure is merely an example, and proper changes within the spirit of the invention, which are easily conceivable by a skilled person, are included in the scope of the invention as a matter of course. In addition, in some cases, in order to make the description clearer, the widths, thicknesses, shapes, etc., of the respective parts are schematically illustrated in the drawings, compared to the actual modes. However, the schematic illustration is merely an example, and adds no restrictions to the interpretation of the invention. Besides, in the specification and drawings, the same or similar elements as or to those described in connection with preceding drawings or those exhibiting similar functions are denoted by like reference numerals, and a detailed description thereof is omitted unless otherwise necessary.

### (First Embodiment)

A secondary battery of the first embodiment will now be described in detail.

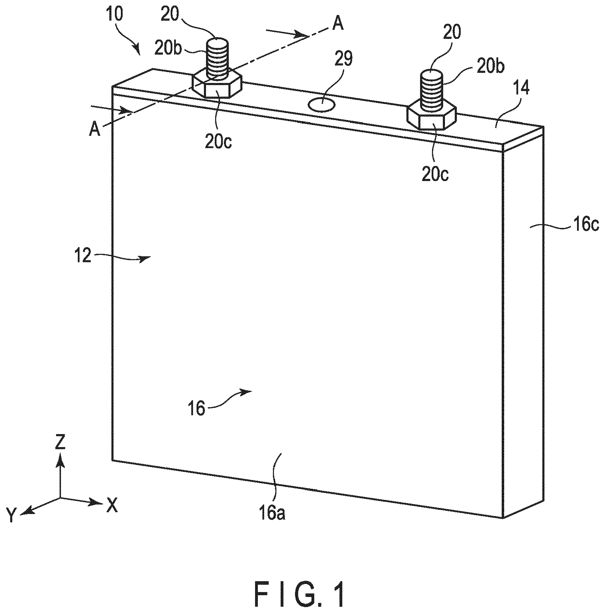

FIG. 1 is a perspective view showing an appearance of the secondary battery of the first embodiment.

As shown in FIG. 1, a secondary battery 10 is a non-aqueous electrolytic secondary battery, such as a lithium ion battery, and comprises a flat and substantially rectangular parallelepiped-shaped outer container 12 and an electrode assembly 30, which will be later described, accommodated with a non-aqueous electrolyte inside the outer container 12. The outer container 12 is, for example, a resin container formed of resin. The outer container 12 includes a container body 16 with an opened upper end and a plate-like lid body 14 fixed to the container body 16 to close the opening of the container body 16, and is formed to be airtight inside. In the first embodiment, as described above, the container body 16 and the lid body 14 are formed of an electrically insulating resin.

The lid body 14 comprises a pair of output terminals 20 and an inlet 29.

Here, the longitudinal direction of the lid body 14 and the container body 16 is defined as an X direction, the width direction of the lid body 14 and the container body 16, which is orthogonal to the longitudinal direction X is defined as a Y direction, and the height direction of the container body 16 is defined as a Z direction.

Note that the outer container 12 is not limited to a resin-made, but it may as well be a metal container formed of a metal such as aluminum alloy, iron or stainless steel.

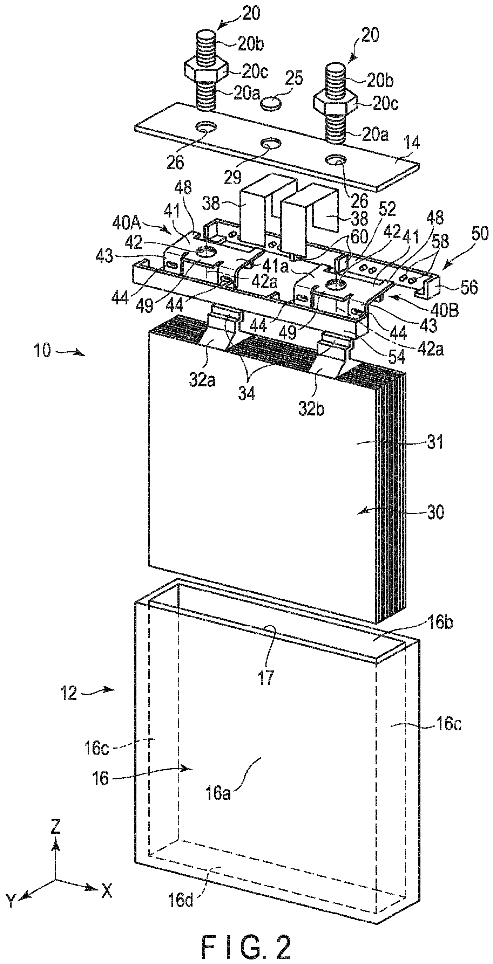

FIG. 2 is an exploded perspective view of the secondary battery shown in FIG. 1.

As shown in FIG. 2, the container body 16 of the outer container 12 includes a rectangular-shaped long side wall 16a, a rectangular-shaped long side wall 16b opposing parallel with an interval to the long side wall 16a, a pair of short side walls 16c opposing each other and a bottom wall 16d. Upper edges of the pair of long side walls 16a and 16b and upper edges of the pair of short side walls 16c define a rectangular-shaped upper opening 17.

The lid body 14 is formed into a rectangular plate with a size approximately equal to that of the upper opening 17. The lid body 14 is fixed to the container body 16 while closing the upper opening 17.

The lid body 14 comprises a pair of circular perforations 26 formed therein. Each of the perforations 26 is a through hole formed to penetrate the lid body 14 in the height direction (thickness direction) Z. The pair of perforations 26 are located in respective end portions of the lid body 14 along the longitudinal direction X and are spaced apart from each other along the longitudinal direction X. Between the pair of perforations 26, an inlet 29 is located. After pouring the non-aqueous electrolyte into the outer container 12 through the inlet 29, the inlet 29 is sealed with, for example, a disk-shaped sealing lid 25.

The output terminals 20 are each formed into a column shape extending along the height direction Z, and includes a first external thread portion 20a formed at one end portion, a second external thread portion 20b formed at the other end portion and an annular flange portion 20c located between the first external thread portion 20a and the second external thread portion 20b, which are integrated into one body. The flange portion 20c is formed into a hexagonal shape, for example, and constitutes a nut. The output terminals 20 are attached to the lid body 14 as the first external thread portions 20a are inserted into the respective perforations 26 of the lid body 14.

As shown in FIG. 2, the electrode assembly 30 accommodated in the outer container 12 is constituted by, for example, stacking a plurality of sheet-shaped positive electrode plates and negative electrode plates alternately one on another with separators interposed between each pair. The positive electrode plates each include a plate-shaped positive electrode current collector, and a positive electrode active material layer formed on at least one side of the positive electrode current collector, and a positive electrode current collecting tab 32a extending from one end of the positive electrode current collector in the height direction Z. The negative electrode plates each include a plate-shaped negative electrode collector, a negative electrode active material layer formed on at least one side of the negative electrode collector, and a negative electrode current collection tab 32b extending from one end of the negative electrode current collector along the height direction Z. The separator has electrically insulating properties and electrically insulates the negative electrode plate and the positive electrode plate from each other.

The current collectors and current collecting tabs of the negative electrode plates and positive electrode plates are each formed from a metal foil having a thickness of about 5 to 50 µm, for example. The material of the metal foil may vary depending on the type of the active material used for the positive and negative electrodes, but, for example, aluminum, aluminum alloy, copper, or copper alloy may be used.

The positive electrode current collecting tabs 32a extend outward from one end of the electrode assembly (a group of electrode) 30 and are stacked in the width direction Y. The extending portions of the positive electrode current collecting tabs 32a may be collectively held by a backup lead 34 bent into a U-shape. The positive electrode current collecting tabs 32a are located on one end side of the electrode assembly 30 in the longitudinal direction X.

The negative electrode current collecting tabs 32b extend outward from one end of the electrode assembly 30 and are stacked in the width direction Y. The extending portions of the negative electrode current collecting tabs 32b are collectively held by a backup lead 34 bent into a U-shape. The negative electrode current collecting tabs 32b are located at the other end side of the electrode assembly 30 in the longitudinal direction X.

As described above, the positive electrode current collecting tabs 32a and the negative electrode current collecting tabs 32b extend in the same direction from one end and of the electrode assembly 30, and are located at intervals from each other along the longitudinal direction X of the electrode assembly 30. The positive electrode current collecting tabs 32a and the negative electrode current collecting tabs 32b are springy and have an urging force upward in the height direction Z.

The electrode assembly 30 configured as described above is accommodated inside the container body 16 in such a manner that one end surface of the electrode assembly 30, the positive electrode current collecting tabs 32a and the negative electrode current collecting tabs 32b are directed to oppose the lid body 14 along the height direction Z. Between the one end surface of the electrode assembly 30 and the lid body 14, a predetermined interval is provided.

As shown in FIG. 2, the secondary battery 10 comprises a pair of insulators 50, an adhesive member 38, a positive electrode lead 40A and a negative electrode lead 40B provided in a space between the electrode assembly 30 and the lid body 14 inside the outer container 12.

The insulators 50 are formed, for example, of an electrically insulating resin. The insulator 50 is formed into a frame shape to enclose the space between the lid body 14 and the electrode assembly 30, and is disposed in contact with an inner surface of the container body 16. The insulators 50 electrically insulate the positive electrode lead 40A, the negative electrode lead 40B, the positive electrode current collecting tabs 32a, and positive electrode current collecting tabs 32b from the container body 16, and also functions as a spacer to maintain the interval between the lid body 14 and the electrode assembly 30.

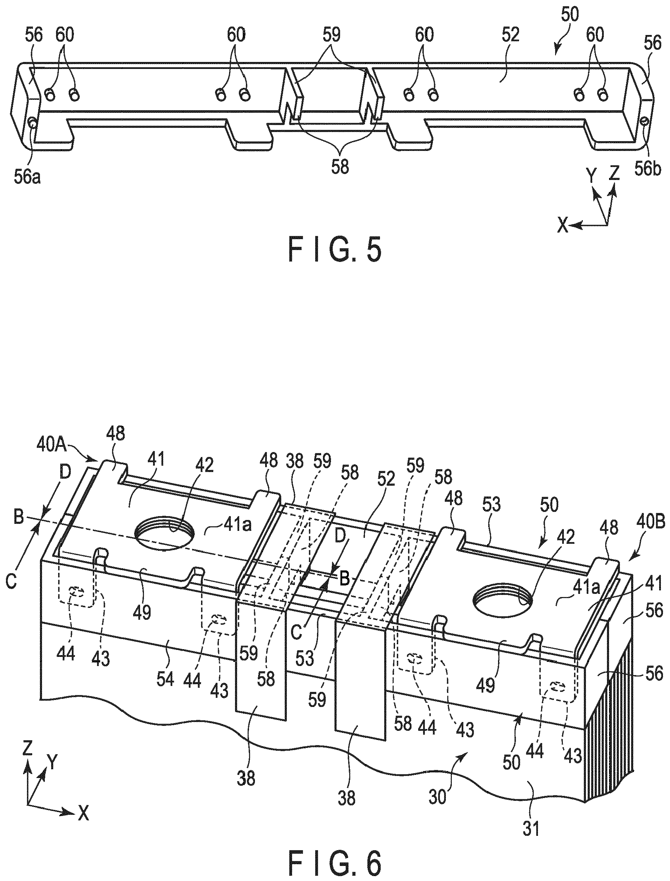

For example, an insulator 50 may be formed by combining a pair of divided insulator members 50, into one to form a frame body. The shape of the insulator 50 will be described in detail later in the explanation of FIG. 5.

The adhesive member 38 is, for example, a strip-like adhesive tape. The adhesive member 38 holds each insulator 50 and the electrode assembly 30 in an integrated state. The position where the adhesive member 38 is attached will be described later in the explanation of FIG. 6.

The positive electrode lead 40A is located between the insulators 50 in the width direction Y, and electrically connects the output terminals 20 and the positive electrode current collecting tabs 32a respectively to each other. The negative electrode lead 40B is located between the insulators 50 in the width direction Y and electrically connects the output terminals 20 and the negative electrode current collecting tabs 32b respectively to each other. In the first embodiment, the positive electrode lead 40A and the negative electrode lead 40B have respective configurations and shapes identical to each other.

The configuration of the lead of the secondary battery 10 in the first embodiment will now be described in detail, by focusing on the positive electrode lead 40A as a typical example.

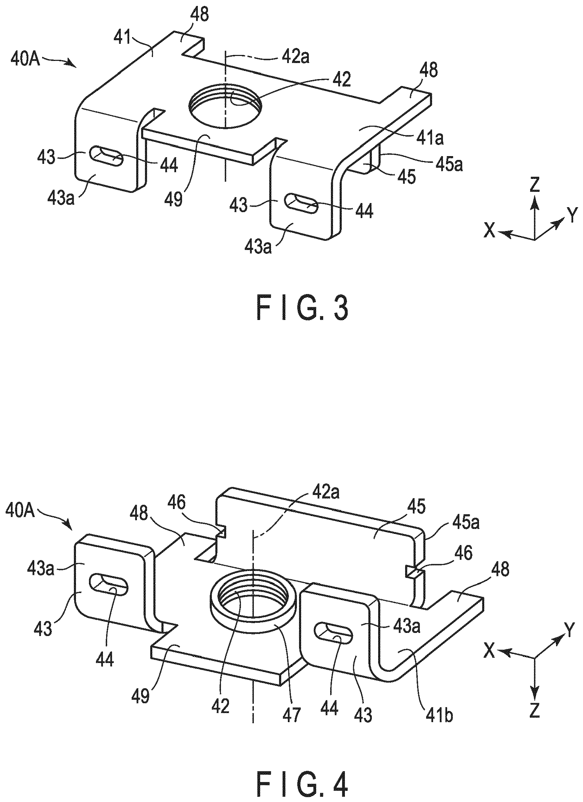

FIG. 3 is a perspective view of the positive electrode lead, and FIG. 4 is a perspective view of the negative electrode lead as viewed from a different direction.

As shown in FIGS. 3 and 4, the positive electrode lead 40A is constituted by bending a conductive metal sheet material. For example, the positive electrode lead 40A includes a rectangular junction 41, a rectangular first extending portion 45 extending from one side edge of the rectangular junction 41 so as to be substantially perpendicular to the rectangular junction 41, and a pair of rectangular second extending portions 43 extending from respective ends of the other side edge of the junction 41 so as to be substantially perpendicular to the junction 41, which are integrated into one body.

The junction 41 is formed into the shape of a rectangular plate with a pair of side edges extending along the longitudinal direction X, and includes an upper surface 41a opposing the lid body 14 and a lower surface 41b located on an opposite side to the upper surface 41a. The junction 41 includes a pair of first engagement projecting portions 48 projecting in a surface direction from respective end portions of one side edge beyond the first extending portion 45, and a second engagement projecting portion 49 projecting in the surface direction from a central portion of the other side edge beyond the second extending portion 43.

Further, the junction 41 includes a cylindrical protruding portion 47 provided to protrude substantially from a central portion of the lower surface 41b and an internal thread portion 42 formed to penetrate the junction 41 and the protruding portion 47 along the height direction Z. The internal thread portion 42 has a length of 2 mm or more in a direction along an axis 42a and is provided for the first external thread portion 20a of the output terminal 20 to be screwed therein.

The first extending portion 45 extends out in the form of a plate along the height direction Z and includes an outer surface 45a opposing parallel to the long side wall 16b of the container body 16. Recesses are formed respectively by depressing a pair of side edges of the first extending portion 45 extending in the height direction Z, and thus first engaged portions 46 are formed.

Each of the second extending portions 43 includes an outer surface 43a opposing parallel to the long side wall 16a of the container body 16. Each second extending portion 43 includes a second engaged portion 44, which is a through hole formed to penetrate the second extending portion 43 along the width direction Y. Note that the second engaged portion 44 is, for example, an opening elongated along the longitudinal direction X.

The shape of the insulators 50 of the first embodiment will now be described.

FIG. 5 is a perspective view of one insulator 50. For example, the insulators 50 have shapes identical to each other.

As shown in FIG. 5, the insulator 50 is formed into a slender plate extending along the longitudinal direction X, and includes an inner surface 52 which engages with the positive electrode lead 40A and the negative electrode lead 40B, an outer surface 54 (see FIG. 2) which is in contact with the inner surface of the container body 16, an upper surface 53 opposing the lid body 14 between the inner surface 52 and the outer surface 54, and a connecting portion 56 formed by bending both ends of the longitudinal direction X along the width direction Y.

The inner surface 52 of the insulator 50 includes two ribs 58 protruding from the inner surface in the central portion along the longitudinal direction X, and a plurality of, for example, four engagement projections 60 formed to project therefrom between the ribs 58 and the connecting portion 56.

The ribs 58 each include an end surface 59 opposing the lid body 14 and located on the same plane as that of the upper surface 53. The ribs 58 increase the rigidity of the insulator 50 and prevent deflection of the adhesive member 38.

The engagement projections 60 are located in positions and with dimensions by which they can be engaged with the first engaged portions 46 or the second engaged portions 44 of the positive electrode lead 40A or the negative electrode lead 40B, respectively.

The connecting portion 56 includes a projecting portion 56a on one end surface and a recess portion 56b on the other end surface. The projecting portion 56a and the recess portion 56b are formed in positions and with dimensions by which they can engage each other. The pair of insulators 50 are coupled together as the projecting portion 56a of one insulator 50 and the recess portion 56b of the other insulator 50 56b are engaged with each other, and the recess portion 56b of one insulator and the projecting portion 56a of the other insulator 50 are engaged with each other. Further, by coupling the pair of insulators 50 with each other, the rib 58 of one insulator 50 is brought into contact with the rib 58 of the other insulator 50.

The position where the adhesive member 38 of the first embodiment is attached will now be described.

FIG. 6 is a perspective view showing the electrode assembly 30, the positive electrode lead 40A, the negative electrode lead 40B, the insulator 50 and the adhesive members 38. Further, parts of the positive electrode lead 40A, the negative electrode lead 40B and the pair of insulators 50 are indicated by dashed lines.

As shown in FIG. 6, above the electrode assembly 30, the pair of insulators 50 are coupled with each other, and the inner surfaces 52 of the pair of insulators and the first extending portion 45 and the second extending portions 43 of the positive electrode lead 40A and the negative electrode lead 40B are engaged to be connected to each other.

The adhesive member 38 retains the state where the electrode assembly 30, the positive electrode lead 40A, the negative electrode lead 40B and each insulator 50 are integrated together. In more detail, by the urging force of the positive electrode current collecting tabs 32a and the negative electrode current collecting tabs 32b, the positive electrode lead 40A, the negative electrode lead 40B and each insulator 50 are prevented from separating from the electrode assembly 30.

The adhesive member 38 is attached over the pair of side surfaces 31 along the width direction Y of the electrode assembly 30, the outer surface 54 of each insulator 50 and the upper surface 53 of each insulator 50. Here, for example, the adhesive member 38 is attached to overlap the end surfaces 59 of the ribs 58. With this structure, it is possible to prevent the adhesive member 38 from deflecting toward the height direction Z.

Note that the position where the adhesive member 38 is attached is not limited to the above-described position, but it may be any position as long as the insulator 50 is not detached from the electrode assembly 30. For example, the adhesive member may be attached along the longitudinal direction X such that it is overlaid on the outer surface 54 of each insulator 50 and the pair of side surfaces 31 of the electrode assembly 30.

The engagement of the positive electrode lead 40A and each insulator 50 of the first embodiment will now be described.

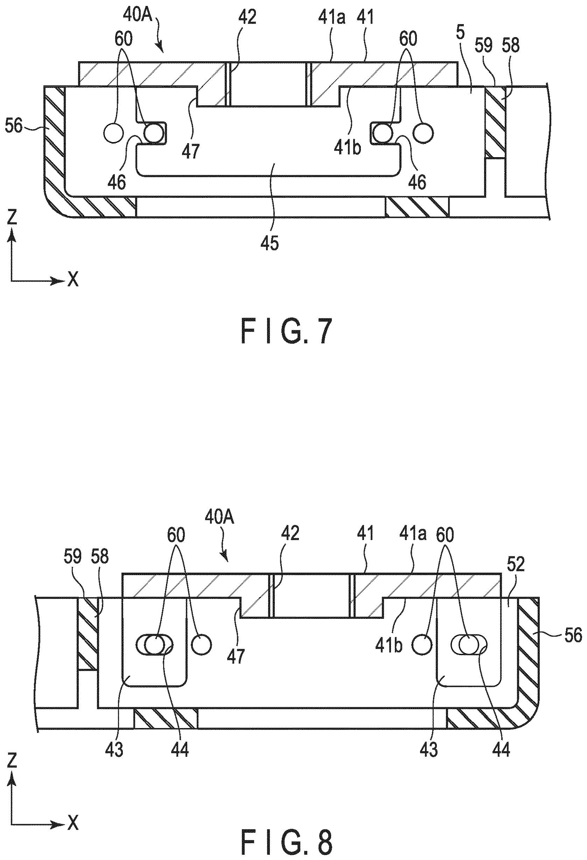

FIG. 7 is a cross-sectional view taken along line B-B shown in FIG. 6 as viewed from the direction of arrow C, in which the positive electrode lead 40A and the insulator 50 are extracted.

As shown in FIG. 7, the positive electrode lead 40A is coupled as the first engaged portion 46 of the positive electrode lead 40A and the engagement projection 60 of the insulator 50 are engaged with each other. Between the first engaged portion 46 and the engagement projection 60, a gap is made in the longitudinal direction X. The first engaged portion 46 and the engagement projection 60 are brought into contact with each other in the height direction Z.

FIG. 8 is a cross-sectional view taken along line B-B shown in FIG. 6 as viewed from the direction of arrow D, in which the negative electrode lead 40A and the insulator 50 are extracted.

As shown in FIG. 8, the positive electrode lead 40A is coupled as the second engaged portion 44 of positive electrode lead 40A and the engagement projection 60 of the insulator 50 are engaged with each other. Between the second engaged portion 44 and the engagement projection 60, a gap is made along the longitudinal direction X. Further, the second engaged portion 44 and the engagement projection 60 are brought into contact with each other in the height direction Z.

That is, the positive electrode lead 40A is configured to be movable in the longitudinal direction X with respect to the insulator 50, while its movement along the height direction Z is restricted. The reason for restricting the movement of the positive electrode lead 40A in the height direction Z is to prevent the positive electrode lead 40A from displacing relatively with respect to each insulator 50 by the urging force of the positive current collecting tabs 32a and the negative current collecting tabs 32b.

The internal configuration of the assembled secondary battery 10 will now be described.

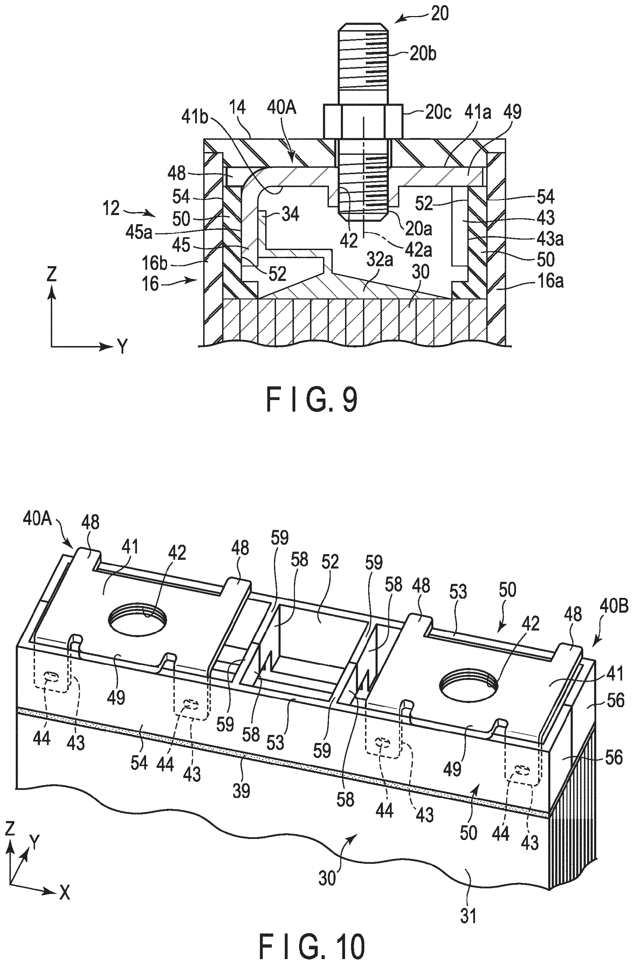

FIG. 9 is a cross-sectional view taken along line A-A in FIG. 1.

As shown in FIG. 9, the outer container 12 includes a container body 16 with an opening at the upper end thereof and the lid body 14 which closes the opening of the container body 16. The electrode assembly 30, the positive electrode lead 40A and the pair of insulators 50 are accommodated inside the outer container 12. Meanwhile, the output terminal 20 is attached to the outer container 12 from the outside of the outer container 12 (from above the lid body 14).

The electrode assembly 30 is located between the pair of long side walls 16a and 16b of the container body 16, and includes the positive electrode current collecting tab 32a extending toward the lid body 14. The distal end of the positive electrode current collecting tab 32a is held by the backup lead 34 to be connected to the first extending portion 45 of the positive electrode lead 40A.

The pair of insulators 50 are aligned along the width direction Y and located between the electrode assembly 30 and the lid body 14. The outer surface of each insulator 50 is in contact with the inner surface of the container body 16, and the inner surface of each insulator 50 is engaged with the outer surface of the positive electrode lead 40A.

The positive electrode lead 40A is located between the electrode assembly 30 and the lid body 14, and is coupled with the insulator 50 as the first engaged portion 46 and the second engaged portion 44 and the engagement projection 60 of each insulator 50 are respectively engaged with each other. (For the first engaged portion 46, the second engaged portion 44 and the engagement projection 60, see FIGS. 3, 4 and 5).

The positive electrode lead 40A includes the junction 41 in contact with the inner surface of the lid body 14, the first extending portion 45 extending from the junction 41 along the long side wall 16a, and the second extending portion 43 extending from the junction 41 along the long side wall 16b.

The junction 41 includes the first engagement projecting portion 48, the second engagement projecting portion 49, the protruding portion 47 protruding from the lower surface of the junction 41, and the internal thread portion 42 formed to penetrate the junction 41 and the protruding portion 47. The first engagement projecting portion 48 is brought into contact with the upper surface 53 of one insulator 50 and the second engagement projecting portion 49 is brought into contact with the upper surface 53 of the other insulator 50, and thus the positive electrode lead 40A is held by each insulator 50.

The outer surface 45a of the first extending portion 45 is brought into contact with the inner surface 52 of one insulator 50 and the outer surface of the second extending portion 43 is brought into contact with the inner surface 52 of the other insulator 50. The positive electrode lead 40A is engaged with the insulator 50 as the outer surfaces 43a of the first extending portion 45 and the second extending portion 43 are brought into contact with the inner surface 52 of the insulator 50.

The output terminal 20 includes the first external thread portion 20a, the second external thread portion 20b and the flange portion 20c located between the first external thread and the second external thread.

The first external thread portion 20a is threaded into the internal thread portion 42 of the positive electrode lead 40A through the perforation 26 of the lid body 14 until the flange portion 20c is brought into contact with the outer surface of the lid body 14. Thus, the output terminal 20 and the positive electrode lead 40A are fixed to the outer and inner surfaces of the lid body 14, respectively, and the output terminal 20 is electrically connected to the positive electrode lead 40A.

The effects of the secondary battery according to the first embodiment will now be described.

As shown in FIGS. 2 and 9, the secondary battery 10 includes the outer container 12, the electrode assembly 30, the output terminal 20, the leads (the positive electrode lead 40A and the negative electrode lead 40B) and the pair of insulators 50. The leads each include the first extending portion 45 and the second extending portion 43 which engage with the inner surface 52 of each insulator 50. With this configuration, it is possible to prevent displacement of the leads, which may be caused by the urging force by the positive current collecting tabs 32a and the negative current collecting tabs 32b, respectively, and thus stably secures the lid body 14 to the container body 16. The lid body 14 can be stably fixed to the container body 16.

As shown in FIG. 6, when the adhesive member 38 is attached to the pair of side surfaces 31 of the electrode assembly 30 and the outer surface 54 of the insulator 50, the integrated state of the electrode assembly 30 and the insulator 50 can be retained, thereby facilitating the accommodation thereof into the container body 16.

Further, as shown in FIGS. 3, 4 and 5, the first engaged portion 46 and the second engaged portion 44 are provided in the lead and the engagement projection 60 is provided in each insulator 50, and thus it is easy to position the lead and to connect it to the output terminal 20. In other words, a secondary battery that is easy to assemble can be obtained.

### (Second Embodiment)

The secondary battery of the second embodiment will now be described.

FIG. 10 is a perspective view showing an electrode assembly 30, a positive electrode lead 40A, a negative electrode lead 40B and insulators 50 according to the second embodiment. The secondary battery 10 has a configuration similar to that of the first embodiment, except for the configuration described in the second embodiment.

As shown in FIG. 10, the secondary battery of the second embodiment is configured without the adhesive member 38.

The electrode assembly 30 and each insulator 50 are fixed by an adhesive 39. The adhesive 39 is provided between the electrode assembly 30 and each insulator 50 in the height direction Z.

According to the second embodiment configured as described above, the electrode assembly 30 and the insulating body 50 can be retained in an integrated state, which facilitates the accommodation thereof in the container body 16. In other words, a secondary battery that is easy to assemble can be obtained.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A secondary battery (10) comprising:
an outer container (12) including a pair of long side walls (16a, 16b) opposing each other with an interval therebetween and a lid body (14) fixed to one end of each of the pair of long side walls (16a, 16b);
an electrode assembly (30) including a group of electrodes and current collecting tabs (32a, 32b) extending from the group of electrodes, and accommodated in the outer container (12);
an output terminal (20) provided on the lid body (14);
a lead (40A, 40B) provided between the electrode assembly (30) and the lid body (14) inside the outer container and electrically connecting the output terminal (20) and the current collecting tabs (32a, 32b) to each other, and including a junction (41) opposing the lid body (14) and connected to the output terminal (20);
a first insulator (50) provided between the electrode assembly (30) and the lid body (14) inside the outer container (12); and
a second insulator (50) provided between the electrode assembly (30) and the lid body (14) inside the outer container (12),
**characterized in that**:
the lead (40A, 40B) includes a first extending portion (45) extending from the junction (41) along an inner surface of one of the long side walls (16a, 16b), and a second extending portion (43) extending from the junction (41) along an inner surface of another one of the long side walls (16a, 16b) ;
the first insulator (50) is disposed to oppose the inner surface of one of the long side walls (16a, 16b) and includes an inner surface engaged with an outer surface of the first extending portion (45); and
the second insulator (50) is disposed to oppose an inner surface of another one of the long side walls (16a, 16b), and includes an inner surface engaged with an outer surface of the second extending portion (43).

2. The secondary battery (10) of claim 1, **characterized in that**
the first insulator (50) and the second insulator (50) each include an engagement projection (60) projecting from the inner surface, and
the first extending portion (45) and the second extending portion (43) of the lead (40A, 40B) each include an engaged portion (44, 46) that engages with the respective engagement projection.

3. The secondary battery (10) of claim 2, **characterized in that**
the engaged portion (44, 46) is a through hole formed to penetrate the first extending portion (45) or the second extending portion (43).

4. The secondary battery (10) of claim 2, **characterized in that**
the engaged portion (44, 46) is an engagement groove formed by depressing a side edge of the first extending portion (45) or the second extending portion (43).

5. The secondary battery (10) of any of claims 1 to 4, **characterized by** further comprising:
an adhesive tape bonded over a pair of side surfaces of the electrode assembly (30) and an outer surface of each of the first insulator (50) and the second insulator (50), which opposes the respective long side wall (16a, 16b).

6. The secondary battery (10) of claim 5, **characterized in that**
the first insulator (50) and the second insulator (50) each include a rib (58) protruding from the respective inner surface, and
the adhesive tape is affixed to the first insulator (50) and the second insulator (50) to be overlaid on the ribs (58).

7. The secondary battery (10) of any of claims 1 to 4, **characterized in that**
the first insulator (50) and the second insulator (50) are fixed to the electrode assembly (30) with an adhesive.
